# EUROPEAN PATENT SPECIFICATION

(11) **EP 2 503 845 B1**
(45) Date of publication and mention of the grant of the patent: **29.07.2015**
(21) Application number: 12001514.4
(22) Date of filing: 06.03.2012
(51) Int. Cl.: H05B 33/08

(54) **Lighting device for solid-state light source, and illumination apparatus and system including same**
Beleuchtungsvorrichtung für eine Festkörperlichtquelle, und Beleuchtungsvorrichtung und -system damit
Dispositif d'éclairage pour source lumineuse à semi-conducteur et appareil d'éclairage et système le comprenant

(30) Priority: 23.03.2011 JP 2011065091
(43) Date of publication of application: 26.09.2012
(73) Proprietor: Panasonic Intellectual Property Management Co., Ltd., Osaka 540-6207 (JP)
(72) Inventor: Watanabe, Koji, Osaka 540-6207 (JP); Mizukawa, Hiromitsu, Osaka 540-6207 (JP); Ukita, Nobuo, Osaka 540-6207 (JP); Nisimoto, Kazuhiro, Osaka 540-6207 (JP)
(74) Representative: Samson & Partner Patentanwälte mbB

(56) References cited:
- WO-A1-2004/057921
- US-A1- 2010 148 691

## Description

### Field of the Invention

The present invention relates to a lighting device for lighting a solid-state light source such as a light emitting diode (LED) and an illumination apparatus and system including same.

### Background of the Invention

Conventionally, Japanese Patent Application Publication No. 2005-267999(JP2005-267999A) has disclosed an LED illumination apparatus capable of dimming an LED based on a dimming signal. This apparatus determines a dimming ratio in accordance with the dimming signal and controls the LED to be turned on through pulse width modulation (PWM) control when the dimming ratio is higher(brighter) than a predetermined value and the LED to be turned on through peak value control when the dimming ratio is lower(darker) than the predetermined value.

In JP2005-267999A, the dimming ratio is determined based on the dimming signal, and the PWM control and the peak value control are switched depending on whether the dimming ratio is higher or lower than a predetermined value. This, however, causes unstable operations and a glimmer of light before and after switching between the PWM control and the peak value control WO 2004/057921 A1 discloses a lighting device according to the features of the preamble of claim 1.

### Summary of the Invention

While the invention is defined in the independent claim, further aspects of the invention are set forth in the dependent claims, the drawings and the following description.

In view of the above, the present invention provides a solid-state light source lighting device in which a dimming operation is stable in a wide range.

In accordance with an aspect of the present invention, there is provided a lighting device for a solid-state light source. The lighting device includes a DC power source circuit unit for performing power transform of an input DC power source by using a switching device and allowing a thus-generated current to flow through the solid-state light source; and a current control unit configured to control the switching device to adjust the current flowing through the solid-state light source. The current control unit includes a first switching control unit for varying an on-time width of the switching device; and a second switching control unit for performing activation and inactivation of the switching device. An activating period of the second switching control unit is longer than one cycle of the first switching control unit, and dimming control is achieved by the first switching control unit and the second switching control unit brightness of the solid-state light source may be controlled mainly by the first switching control unit when the brightness is equal to or greater than a predetermined level and mainly by the second switching control unit when the brightness is smaller than the predetermined level.

In the DC power source circuit unit, an inductor may be connected to the switching device in series so that a current flows through the solid-state light source by using a charging current and a discharge current of the inductor, and the first switching control unit may control the switching device so that the currents of the inductor perform a zero-crossing operation.

The DC power source circuit unit includes a capacitive impedance connected to the solid-state light source in parallel, and the current flowing through the solid-state light source may have continuous waveforms.

The solid-state light source lighting device may further include a dimming control unit configured to output a dimming control signal in accordance with an external dimming signal. An output level of each of the switching control units of the current control unit may be varied depending on signal levels of the dimming control signal, and the dimming control unit may output one signal.

The solid-state light source lighting device may further include a dimming control unit configured to output a dimming control signal in accordance with an external dimming signal. The dimming control unit may output two independent dimming control signals with regard to the respective switching control units of the current control unit.

An activating period may be substantially consistently maintained by the second switching control unit at an approximately lowest limit value of the on-time width of an operating period of the first switching control unit.

The solid-state light source may be an LED.

An illumination apparatus includes the solid-solid light source lighting device, and an illumination system includes the solid-state light source lighting device.

In accordance with the aspect of the present invention, the first switching control unit for varying an on-time width of the switching device, and the second switching control unit for controlling the switching device Q1 to be activated and inactivated, in which the activating period of the second switching control unit is longer than one cycle of the first switching control unit, and the dimming control is achieved by the first switching control unit and the second switching control unit, thereby having an effect of making dimming stable in a wide range.

### Brief Description of the Drawings

The objects and features of the present invention will become apparent from the following description of embodiments, given in conjunction with the accompanying drawings, in which:
Fig. 1 is a circuit diagram showing a schematic configuration of a solid-state light source lighting device in accordance with a first embodiment of the present invention;
Fig. 2 is a view showing an operating waveform of the solid-state light source lighting device;
Fig. 3 is a circuit diagram of a solid-state light source lighting device in accordance with a second embodiment of the present invention;
Fig. 4 is a view for explaining an operation of the solid-state light source lighting device;
Fig. 5 is a circuit diagram of a solid-state light source lighting device in accordance with a third embodiment of the present invention;
Fig. 6 is a block circuit diagram showing a configuration of a solid-state light source lighting device in accordance with a fourth embodiment of the present invention;
Fig. 7 is a circuit diagram of the solid-state light source lighting device;
Fig. 8 is a view showing an operating waveform of the solid-state light source lighting device;
Fig. 9 is a circuit diagram of a solid-state light source lighting device in accordance with a sixth embodiment of the present invention; and
Fig. 10 is a view showing an operating waveform of the solid-state light source lighting device.

### Detailed Description of the Embodiments

### (First exemplary embodiment)

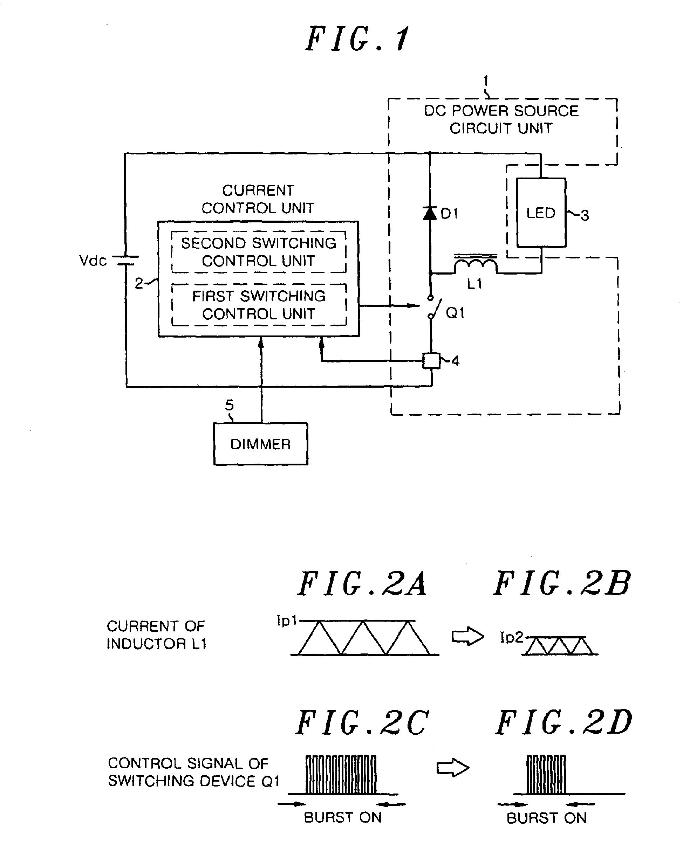

Fig. 1 is a circuit diagram of a solid-state light source lighting device in accordance with a first embodiment of the present invention. The solid-state light source lighting device in this embodiment includes a DC power source unit 1 having a flyback diode D1, an inductor L1, a switching device Q1 and a DC detecting unit 4; a current controller 2 having first and second switching control units; and a dimmer 5. The DC power source circuit unit 1 is connected to an input DC power source Vdc. The DC power source circuit unit 1 serves as a switching power circuit that performs power transform of an input DC power Vdc by using the switching device Q1 and supplies a thus-generated direct current to a solid-state light source 3 such as a light emitting diode (LED) or an organic light emitting diode (OLED). In this embodiment, a step-down chopper circuit (back converter) is employed.

The step-down chopper circuit has a well-known configuration in which the solid-state light source 3, the inductor L1, the switching device Q1 and the DC detecting unit 4 are connected in series between positive and negative electrodes of the input DC power source Vdc, and the flyback diode D1 is connected in parallel to the series circuit of the solid-state light source 3 and the inductor L1 to form a closed circuit.

An operation of the step-down chopper circuit is well known. Specifically, when the switching device Q1 is turned on, a gradually increasing current flows in a route of an positive electrode of the input DC power source Vdc, the solid-state light source 3, the inductor L1, the switching device Q1, the DC detecting unit 4 and the negative electrode of the input DC power source Vdc, thereby storing an energy in the inductor L1. When the switching device Q1 is turned off, an induced voltage of the inductor L1 causes a gradually decreasing current to flow in a route of the inductor L1, the flyback diode D1,the solid-state light source 3, and the inductor L1, thereby discharging an energy.

An operation in which the switching device Q1 is turned on before completing the energy discharge of the inductor L1 is referred to as a continuous mode. An operation in which the switching device Q1 is turned on when the energy discharge of the inductor L1 (i.e., zero-cross operation) is completed is referred to as a boundary mode. An operation in which the switching device Q1 is turned on subsequent to a suspending period after completing the energy discharge of the inductor L1 is referred to as a discontinuous mode. In this embodiment, either mode may be employed, but the efficiency of the power transform is high in the boundary mode.

The switching device Q1 is turned on and off by the current controller 2 by using a high frequency. When the switching device Q1 is turned on, the gradually increasing current flowing in the switching device Q1 is detected by the current detecting unit 4. A current detection value detected by the current detecting unit 4 is compared with a predetermined critical value set up by the current controller 2. If the current detection value reaches a predetermined threshold, the switching device Q1 is turned off. Thus, a peak value of the current flowing in the switching device Q1 is set up as the predetermined threshold.

Figs. 2A and 2B show waveforms of the current flowing in the inductor L1 when the switching device Q1 is turned on and off. While the current flowing in the inductor L1 is gradually increased, it is equal to the current flowing in the switching device Q1. While the current flowing in the inductor L1 is gradually decreased, it is equal to the current flowing in the flyback diode D1. The present embodiment shows the current flowing through the inductor L1 in the foregoing boundary mode by way of example, but the present invention is not limited thereto. Alternatively, it may be in the continuous mode or the discontinuous mode.

Fig. 2A illustrates the waveform of the current flowing in the inductor L1 when a predetermined threshold Ip1 set up by the current controller 2 is high, and Fig. 2B illustrates the waveform when a predetermined threshold IP2 is low. The thresholds IP1 and IP2 are set up by the current controller 2 depending on a dimming signal supplied from the dimmer 5 to the current controller 2.

Figs. 2C and 2D show voltage waveforms of a control signal outputted from the current controller 2 to the switching device Q1. Fig. 2C illustrates the voltage waveform when a burst-on period of the switching device Q1 is long, and Fig. 2D illustrates the voltage waveform when the burst-on period is short. Here, the burst-on period is a period during which the high-frequency on/off operations of the switching device Q1 are allowed. The switching device Q1 is activated during the burst-on period, and inactivated during the other periods. The burst-on period is set up by the current controller 2 depending on the dimming signal supplied from the dimmer 5 to the current controller 2.

The burst-on operations illustrated in Figs. 2C and 2D are repeated at a frequency (ranging from, e.g., hundreds Hz to several kHz). This repeat frequency is set up to be lower than the high-frequency on/off frequency (several kHz) of the switching device Q1 of the DC power source circuit unit 1. That is, the activating period of the second switching control unit is longer than one cycle of the first switching control unit.

Meanwhile, time axes shown in Figs. 2A and 2B are more exaggerated than time axes shown in Figs. 2C and 2D.

The current controller 2 reads the dimming signal supplied from the dimmer 5, controls the first switching control unit to set up the peak value of the current flowing in the switching device Q1 as shown in Fig. 2A and 2B and vary the on-time width of the switching device Q1, and controls the second switching control unit to set up the burst-on period where the high-frequency on/off operations of the switching device Q1 as shown in Figs. 2C and 2D are allowed. By using the first and second switching control units together, it is possible to realize a stable dimming operation in a wide range.

For example, if a dimming ratio is high (bright), the peak value Ip1 of the current flowing in the switching device Q1 is set up to be high as shown in Fig. 2A, and the burst-on period is set up to be long as shown in Fig. 2C. On the other hand, if the dimming ratio if low (dark), the peak value Ip2 of the current flowing in the switching device Q1 is set up to be low as shown in Fig. 2B, and the burst-on period is set up to be short as shown in Fig. 2D. As such, the dimming is possible in a wide range by using the first switching control unit and the second switching control unit together.

In this embodiment, as compared with the technique of JP2005-267999A, there is no need of switching between the PWM control and the peak value control within the dimming range. Therefore, it is possible to prevent the operation from being unstable before and after the switch, whereby the stable dimming operation can be achieved in a wide range.

In this embodiment, the step-down chopper circuit is used as the DC power source circuit unit 1, but the present invention is not limited thereto. Alternatively, various power source switching circuits such as a step-up chopper circuit, a step-down/up chopper circuit, a flyback converter circuit, etc. may be employed.

### (Second embodiment)

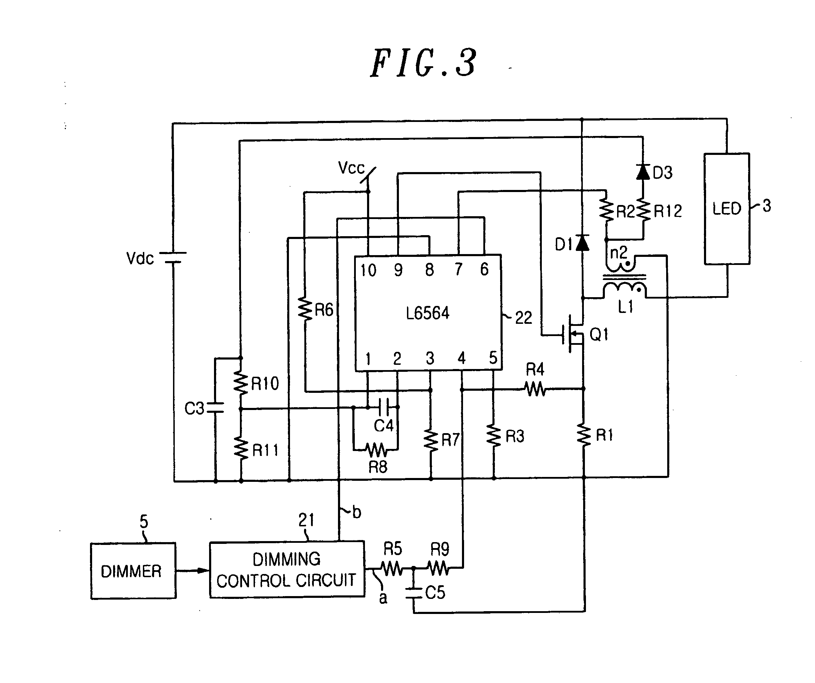

Fig. 3 is a circuit diagram of a solid-state light source lighting device in accordance with a second embodiment of the present invention. In this embodiment, a general-purpose integrated circuit 22 for power-factor improvement control is used to control the peak value of the current flowing in the switching device Q1 in accordance with the predetermined critical values Ip1 and Ip2 as shown in Figs. 2A and 2B, and perform the control in the foregoing boundary mode at a low price.

L6562 manufactured by STMicroelectronics has been conventionally known as the integrated circuit for the power factor correction control. However, in this embodiment, L6564 manufactured by STMicroelectronics is employed as an integrated circuit for selecting whether or not to perform the power-factor correction control (PFC) by using an external signal so that the burst-on period for the control signal of the switching device Q1 can be set up by the external signal as shown in Figs. 2C and 2D.

The L6564 further includes a PFC-OK terminal (the 6^{th} pin) and a VFF terminal (the 5^{th} pin) as compared with the conventional L6562 having eight pins, and the other pins thereof are the same as those of the L6562.

Below, the circuit shown in Fig. 3 will be described while explaining the function of each terminal of the L6564. The 10^{th} pin is a power source terminal and is connected to a control power source voltage Vcc. The 8^{th} pin is a ground terminal and connected to a negative electrode (circuit ground) of the input DC power source Vdc.

The 9^{th} pin is a gate drive terminal and is connected to a gate electrode of the switching device Q1 including a MOSFET. The 7^{th} pin is a zero-cross detecting terminal and connected to one end of a secondary coil n2 of the inductor L1 via a resistor R2. The other end of the secondary coil n2 is grounded.

The 6^{th} pin is the PFC-OK terminal added to the L6562. If the voltage of the 6^{th} pin becomes less than 0.23V, the integrated circuit (IC) is shut down. To restart the IC, it is required to set the 6^{th} pin to be higher than 0.27V. Thus, the 6^{th} pin can be used for a remote on/off control input. The 5^{th} pin is a feed forward terminal, and is connected to the circuit ground via a resistor R3 since it is not used in this embodiment.

The 4^{th} pin is a current detecting terminal, to which a voltage of a current detecting resistor R1 is inputted via a resistor R4, the current detecting resistor R1 being inserted between a source electrode of the switching device Q1 and the circuit ground. Also, a dimming bias voltage is inputted to the 4^{th} pin via a resister R9. The 3^{rd} pin is an input of a built-in multiplier of the IC, which is, in this embodiment, set up as a predetermined voltage obtained by dividing the control power source voltage Vcc with resistors R6 and R7.

The 1^{st} pin is a reversal input terminal of a built-in error amplifier of the IC, and the 2^{nd} pin is an output terminal of the error amplifier. A parallel circuit of a resistor R8 and a capacitor C4 is connected as a feedback impedance of the error amplifier between the 1^{st} pin and the 2^{nd} pin. Also, the 1^{st} pin receives a sub-feedback voltage signal obtained by dividing a voltage of a capacitor C3 with resistors R10 and R11. The capacitor C3 is charged with an induced voltage of the secondary coil n2 of the inductor L1 via a resistor R12 and a diode D3. If the voltage of the capacitor C3 is increased, an on-pulse width of the switching device Q1 is controlled to become narrower.

When the switching device Q1 is turned on, the current flowing in the current detecting resistor R1 becomes increased to thereby raise a voltage detected at the 4^{th} pin. If the voltage of the 4^{th} pin reaches a predetermined critical value, the switching device Q1 becomes turned off. Then, while the energy of the inductor L1 is discharged via the diode D1, the voltage is induced in the secondary coil n2 of the inductor L1. When a flyback current also flows through the diode D1, the induced voltage of the secondary coil n2 disappears and the voltage of the 7^{th} pin is dropped. If the voltage drop of the 7^{th} pin is detected, the switching device Q1 is turned on again.

As for the 4^{th} pin, a DC voltage of the capacitor C5 is overlapped via the resister R9. The capacitor C5 is charged or discharged by an output signal transmitted from the dimming control circuit 21 via the resistor R5. The output signal transmitted from the dimming control circuit 21 is, e.g., a square-wave voltage signal.. The DC voltage to be charged in the capacitor C5 is varied depending on a ratio of high and low level periods of the output signal. That is, the capacitor C5 and the resistor R5 serve as a CR filter circuit (integrating circuit).

When the DC voltage charged in the capacitor C5 is high, the voltage of the 4^{th} pin is increased. Thus, the current flowing through the switching device Q1 is detected as it seems to be increased, and the peak value of the current flowing through the switching device Q1 becomes lower as shown in Fig. 2B.

When the DC voltage charged in the capacitor C5 is low, the voltage of the 4^{th} pin is decreased. Thus, the current flowing through the switching device Q1 is detected as it seems to be decreased, and the peak value of the current flowing through the switching device Q1 becomes higher as shown in Fig. 2A.

As such, it is possible to adjust the peak value of the current flowing through the switching device Q1 by controlling the level of the DC voltage charged in the capacitor C5 depending on a ratio (i.e., on/off duty) of the high and low level periods of the square-wave voltage signal outputted from the dimming control circuit 21.

The dimming control circuit 21 may include, e.g., a dimming microcomputer. In this case, as an output terminal "a", a 2-value output port through which the square-wave voltage signal is outputted may be allocated.

When a microcomputer having a D/A conversion output port is employed as the output terminal a instead of the 2-value output port, it is possible to omit the CR filter circuit including the resistor R5 and the capacitor C5. In this case, if the CR filter circuit is not omitted and an analog output voltage from the D/A conversion output port is inputted to the CR filter circuit and a DC voltage corresponding to one gradation is controlled to be converted at a predetermined duty, it is possible to generate a DC voltage corresponding to multiple gradation as compared with the original gradation of the D/A conversion. Also, in comparison with using the 2-value output port, ripples of the DC voltage charged in the capacitor C5 can be decreased even though the time constants of the resistor R5 and the capacitor C5 are small, thereby improving response characteristic of the control.

Next, another 2-value output port of the microcomputer may be allocated as an output terminal "b" through which the burst-on period shown in Figs. 2C and 2D is designated. Further, the square-wave voltage signal may be outputted in the high level (>0.27V) during the burst-on period and in the low level (<0.23V) during the other periods.

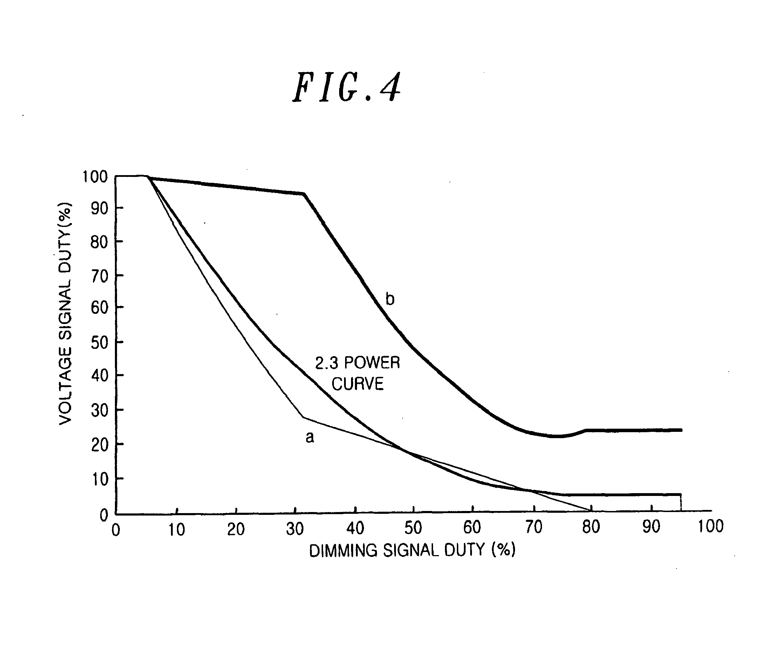

Fig. 4 shows a relationship between a duty (%) of the square-wave voltage signals outputted from the output terminals a and b of the dimming control circuit 21, and an on-duty (%) of the dimming signal inputted from the dimmer 5 to the dimming control circuit 21. In Fig. 4, a curve "a" shown by a fine solid line indicates a variation in an off-duty of the square-wave voltage signal outputted from the first output terminal a, and a curve "b" shown by a fine solid line indicates a variation in an on-duty of the square-wave voltage signal outputted from the second output terminal b.

As shown in FIG. 4, in this embodiment, the dimming is mainly controlled by the first switching control unit when the brightness of the light source is greater than or equal to a predetermined level (less than or equal to about 30% duty of the dimming signal), and the dimming is mainly controlled by the second switching control unit when the brightness of the light source is smaller than the predetermined level (between about 30% and 65% duty of the dimming signal in which a change rate of the curve "b" is higher than that of the curve "a"). Also, the activating period is consistently maintained by the second switching control unit in a substantially lowest limit (equal to or greater than about 80% duty of the dimming signal in this embodiment) of the on-time width during the operation of the first switching control unit, thereby stably maintaining the brightness of the solid-state light source 3.

The duty (%) of the dimming signal inputted from the dimmer 5 to the dimming control signal 21 is varied between 0% and 100%. All lights are turned on when the duty is lower than 5%, and the lights are turned off when the duty is equal to or higher than 95%. Such a dimming signal has been popular in a field of an inverter-type fluorescent lighting device, and generally the square-wave voltage signal having a frequency of 1 kHz and an amplitude of 10 V is used.

The dimming control circuit 21 determines the duty (%) of the dimming signal inputted from the dimmer 5, and varies the duty of the square-wave voltage signal output from the first output terminal a and the duty of the square-wave voltage signal outputted from the second output terminal b depending on the determined duty of the dimming signal. In result, the brightness of the solid-state light source is varied like a 2.3 power curve shown by a bold line in Fig. 4. The 2.3 power curve is a kind of dimming curve so-called a Munsell characteristic curve, which indicates a well-known characteristic in which the brightness seems to smoothly vary depending on dimming control.

The control characteristics exemplarily shown in Fig. 4 may be stored as a data table in an internal memory if the dimming control circuit 21 includes the microcomputer. In this case, a digital value obtained by determining the duty (%) of the dimming signal inputted from the dimmer 5 is determined as an address from the data table, so that the duty of the square-wave voltage signal outputted from the terminals a and b of the dimming control circuit 21 can be controlled on the basis of the determined data.

### (Third embodiment)

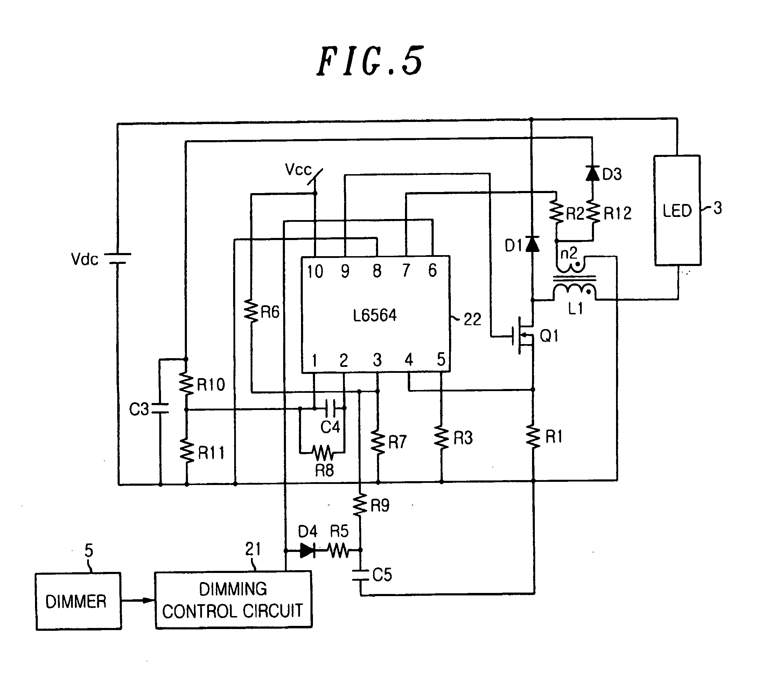

Fig. 5 is a circuit diagram of a solid-state light source lighting device in accordance with a third embodiment of the present invention. In this embodiment, a dimming signal outputted from the dimming control circuit 21 is signal-converted outside of the dimming control circuit 21, thereby generating a dimming control signal related to the first switching control unit and a dimming control signal related to the second switching control unit.

A dimming signal outputted from the dimming control circuit 21 to the 6^{th} pin of the integrated circuit 22 is a square-wave voltage signal having a low frequency (hundreds Hz to several kHz) as in the second embodiment, and varies in its pulse width to allow the operation of the integrated circuit 22 to be performed or stopped. The dimming signal is inputted to the filter circuit of the resistor R5 and the capacitor C5 via the diode D4, and thus converted into a DC voltage.

In the circuit shown in Fig. 5, the DC voltage is overlapped via the resistor R9 in the resistor R7 of the 3^{rd} pin. When the DC voltage of the capacitor C5 is high, the voltage of the 3^{rd} pin in the integrated circuit 22 is high, so that the threshold voltage for turning off the switching device Q1 can be set up to be high. Therefore, when the burst-on period is long as shown in Fig. 2C, the peak value Ip1 of the current flowing through the switching device Q1 becomes higher as shown in Fig. 2A.

On the other hand, when the DC voltage of the capacitor C5 is low, the voltage of the 3^{rd} pin in the integrated circuit 22 is low, so that the critical voltage for turning off the switching device Q1 can be set up to be low. Therefore, when the burst-on period is short as shown in Fig. 2D, the peak value Ip2 of the current flowing through the switching device Q1 becomes lower as shown in Fig. 2B. Accordingly, stable dimming is possible in a wide range.

Further, in the circuit shown in Fig. 5, a dimming signal outputted from the dimming control circuit 21 is the square-wave voltage signal, but the present invention is not limited thereto. Alternatively, the dimming signal outputted from the dimming control circuit 21 may be a DC voltage. In this case, the DC voltage outputted from the dimming control circuit 21 is converted into a pulse width modulation square-wave voltage signal (PWM signal) by an external low-frequency oscillating circuit. Then, the signal after conversion may be preferably used in controlling the 6^{th} pin of the integrated circuit 22. Further, the signal before the conversion (i.e., the DC voltage) may be preferably directly inputted to the 3^{rd} pin of the integrated circuit 22.

In the foregoing embodiments, it is assumed that the square-wave voltage signal having a frequency of 1 kHz and an amplitude of 10 V is used as the dimming signal outputted from the dimmer 5, but the present invention is not limited thereto. Alternatively, various standardized dimming signals such as DALI, DMX512, etc. may be used, or a PWM signal of 100 or 120 Hz may be extracted as the dimming signal from a power source line by performing waveform shaping on a voltage into which a commercial AC power (50 or 60 Hz) is phrase-controlled. Further, the dimmer 5 may be just a variable resistor, or may have any configuration as long as it can output the dimming signal of the DC voltage to an A/D conversion input port of the dimming control circuit 21.

### (Fourth embodiment)

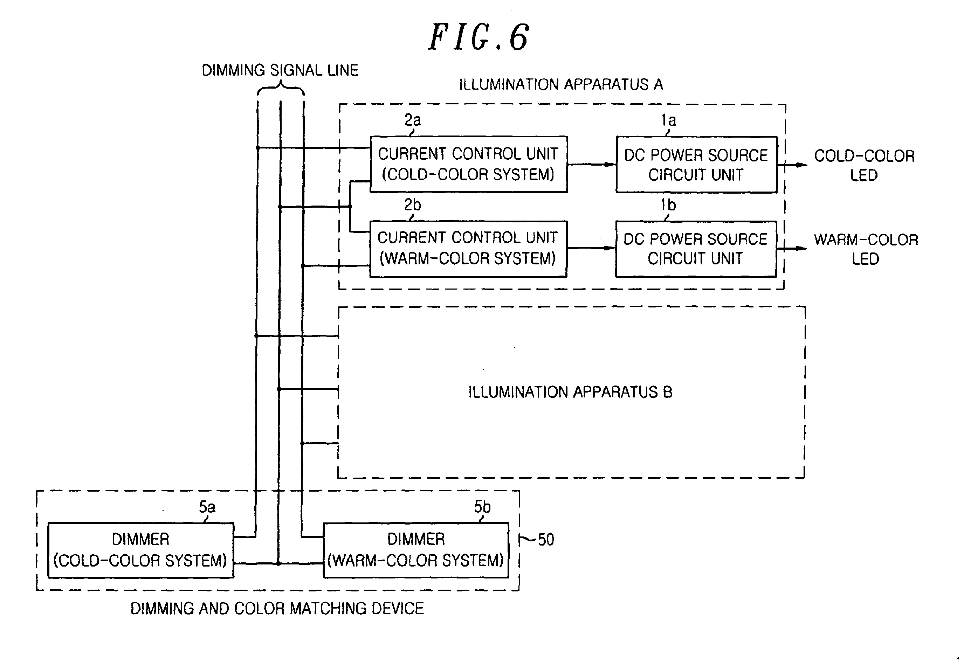

Fig. 6 is a block circuit diagram showing the schematic configuration of a lighting system in accordance with the fourth embodiment. In this embodiment, one illumination apparatus "A" includes a cold-color solid-state light source lighting device having a DC power source circuit 1a and a current control unit 2a; and a warm-color solid-state light source illumination apparatus having a DC power source circuit 1b and a current control unit 2b, so that light outputs of a cold-color LED and a warm-color LED can be individually controlled by the DC power source circuits 1a and 1b and the current control units 2a and 2b, respectively.

An illumination apparatus B has the same configuration as the illumination apparatus A, and there is provided a lighting system including a plurality of illumination apparatuses which are connected to one dimming signal line. A dimming and color matching device 50 for controlling each of the illumination apparatuses A, B, ..., includes a dimmer 5a for transmitting a dimming signal to a cold-color current control unit 2a; and a dimmer 5b for transmitting a dimming signal to a warm-color current control unit 2b. As the dimming signals outputted from the dimmers 5a and 5b are individually controlled, it is possible to control each brightness and color temperature of the illumination apparatus A, B, ... For instance, lights having different color temperatures such as daylight blue, daylight white and warm white, widely used in a field of a fluorescent lamp, may be achieved in a arbitrary brightness.

In the example of Fig. 6, two kinds of light source, i.e., the cold-color LED and the warm-color LED are used, but the present invention is not limited thereto. Alternatively, LEDs corresponding to the three primary colors of light, i.e., red (R), green (G) and blue (B), may be used to achieve any color of light.

### (Fifth embodiment)

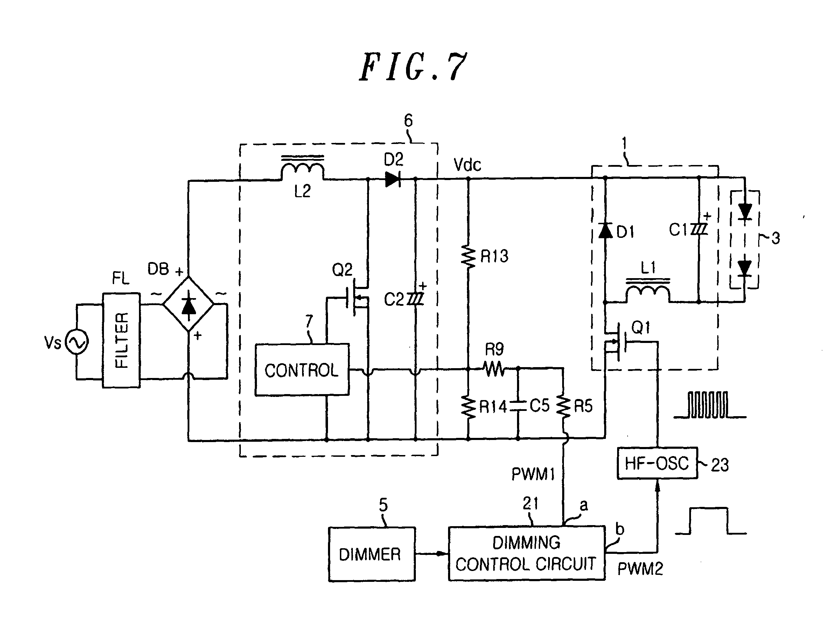

Fig. 7 is a circuit diagram of a solid-state light source lighting device in accordance with a fifth embodiment of the present invention. In this embodiment, a DC power source circuit unit 1 includes a capacitive impedance (smoothing capacitor C1) connected in parallel to a solid-state light source 3, a current flowing in the solid-state light source 3 is a continuous waveform, and a power-factor improvement circuit such as a step-up chopper circuit 6 is employed as the input DC power source Vdc. The configuration and operations of the step-up chopper circuit 6 are well-known. When the switching device Q2 is turned on, the current from an AC power source Vs flows in a route of a filter circuit FL, a full wave rectifier DB, an inductor L2 and the switching device Q2, so that an energy can be accumulated in the inductor L2 while the current from the AC power source Vs is inputted.

When the switching device Q2 is turned off, an induced voltage of the inductor L2 is overlapped with an output voltage of the full wave rectifier DB, thereby charging a smoothing capacitor C2 through a diode D2. At this time, the current from the AC power source Vs flows in a route of the filter circuit FL, the full wave rectifier DB, the inductor L2, the diode D2 and the smoothing capacitor C2, so that the current from the AC power source Vs is inputted. Accordingly, an input power factor is improved. Also, the smoothing capacitor C2 is charged with the DC voltage Vdc boosted higher than the peak value of the output voltage of the full wave rectifier DB.

Such a kind of power-factor improvement circuit generally includes a control circuit 7 for making the output voltage constant at a predetermined target value. Thus, in this embodiment, while an on-pulse width of the switching device Q1 is fixed, by adjusting an on-pulse width of the switching device Q2 and the voltage of the input DC power source Vdc of the DC power source circuit unit 1, the peak value of the current flowing in the switching device Q1 can be varied.

A first square-wave voltage signal PWM1 outputted from a terminal "a" of the dimming control circuit 21 is converted into a DC voltage by the CR filter circuit including the resistor R5 and the capacitor C5. The DC voltage is overlapped with a detecting voltage of an output voltage detecting circuit (a divider circuit of a resistor R13 and a resistor R14) of the step-up chopper circuit 6 through the resistor R9.

If the DC voltage of the capacitor C5 is raised, it is detected that the output voltage Vdc of the step-up chopper circuit 6 seems to be increased. Therefore, the control circuit 7 is operated to decrease the output voltage Vdc. In this way, an increasing slope of the gradually increasing current flowing through the inductor L1 is varied when the switching device Q1 is turned on even though the on-pulse width of the switching device Q1 is constant. Accordingly, the peak value of the current flowing through the switching device Q1 is varied when the on-period of the switching device Q1 is finished.

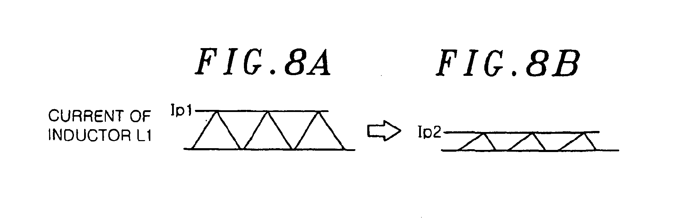

This operation will be described with reference to Figs. 8A and 8B. Fig. 8A shows the current of the inductor L1 when the output voltage Vdc of the step-up chopper circuit 6 is high. Although the on-period of the switching device Q1 is fixed, the increasing slope of the gradually increasing current flowing through the switching device Q1 is large, so that the peak value IP1 of the current flowing through the switching device Q1 is increased when the on-period of the switching device Q1 is finished.

Fig. 8B shows the current of the inductor L1 when the output voltage Vdc of the step-up chopper circuit 6 is low. Although the on-period of the switching device Q1 is fixed, the increasing slope of the gradually increasing current flowing through the switching device Q1 is small, so that the peak value IP2 of the current flowing in the switching device Q1 is decreased when the on-period of the switching device Q1 is finished.

In this embodiment, the on-time width and on/off cycle of the switching device Q1 are fixed as constant values set up by a high-frequency oscillating circuit (HF-OSC) 23. As for an oscillation operation of the high-frequency oscillating circuit 23, oscillation start and an oscillation stop of the high-frequency oscillating circuit 23 is switched in response to a second square-wave voltage signal PWM2 outputted from the terminal b of the dimming control circuit 21. The square-wave voltage signal PWM2 has a low frequency of hundreds Hz to several kHz. The high-frequency oscillating circuit 23 outputs a control signal for turning on/off the switching device Q1 at a high frequency of several tens kHz in the high level, but is operated to keep the switching device Q1 turned off in the low level.

As described above, in the present embodiment, there is provided a unit for varying the peak value of the current flowing through the switching device Q1 but no unit for detecting the peak value is provided. Therefore, it is advantageous to reduce a power loss caused by the current detecting resistor. Since, however, there is no function of restricting the peak in this case, magnetic saturation may occur in the inductor L1 if the switching device Q1 operates in the continuous mode,.

Accordingly, the on-time width and on/off period of the high-frequency oscillating circuit 23 are set up in such a way that the current flowing through the inductor L1 becomes in the discontinuous mode (i.e., the discontinuous mode close to the boundary mode) where there is a slender suspending period as shown in Fig. 8A when the output voltage Vdc of the step-up chopper circuit 6 set up by the first dimming signal (square-wave voltage signal PWM1) is the maximum. In this case, when the output voltage Vdc of the step-up chopper circuit 6 is lower than the maximum, the peak of the current flowing through the switching device Q1 is lowered as shown in Fig. 8B, and thus the current flowing through the inductor L1 becomes necessarily in the discontinuous mode.

In this embodiment, following characteristics are used. When the solid-state light source 3 is a series circuit of n light emitting diodes as shown in Fig. 7, the current flowing through the inductor L1 is lowered at a nearly constant speed since the voltage applied to the inductor L1, through which the flyback current flows, is obtained by forward voltage Vf of the light emitting diode X n + forward voltage of flyback diode D1, during an off-period of the switching device Q1.

Moreover, the voltage applied to the inductor L1 is obtained output voltage Vdc of the step-up chopper circuit 6 - forward voltage Vf of the light emitting diode X n - on-voltage of switching device Q1, during an on-period of the switching device Q1, and thus the speed of increasing the current flowing through the inductor L1 is lowered if the output voltage Vdc is dropped.

In this embodiment, the voltage of the input DC power Vdc is changed in order to vary the peak of the current flowing through the switching device Q1. Accordingly, for example, if LED lighting circuits of two cold- and warm-color systems as shown in Fig. 6 are internally provided in one illumination apparatus, two main power source systems are needed. Therefore, the present embodiment is adapted to an LED dimming illumination apparatus having no color-matching function.

### (Sixth embodiment)

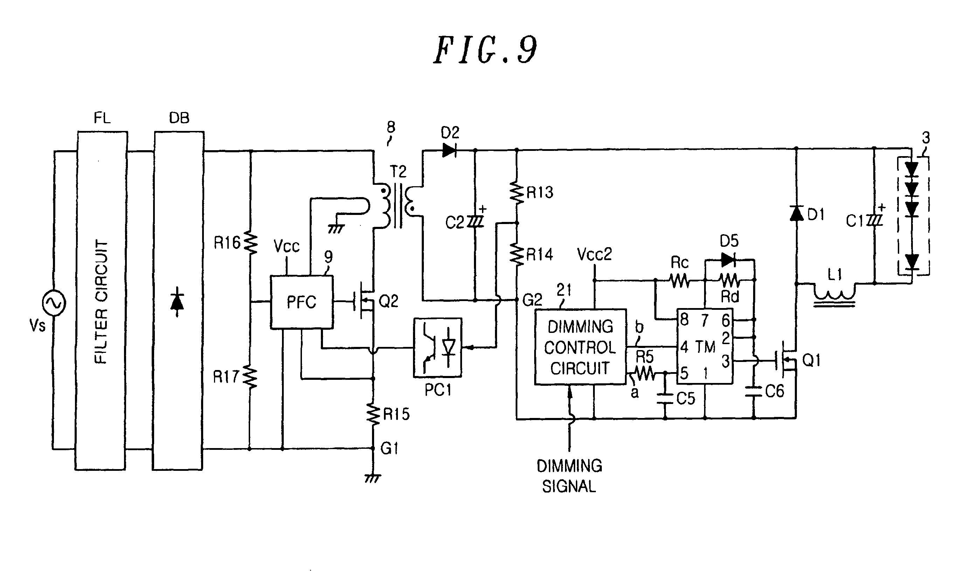

FIG. 9 is a circuit diagram of a solid-state light source lighting device in accordance with a sixth embodiment of the present invention. In this embodiment, a flyback converter circuit 8 is used as an input DC power source Vdc. Also, a timer circuit TM is used to vary the on-pulse width of the switching device Q1 depending on a DC voltage of the capacitor C5 in order to vary the peak of the current flowing through the switching device Q1.

First, the configuration and operations of the flyback converter circuit 8 are well-known. A series circuit of the switching device Q2 and a primary coil of a transformer T2 are connected to a DC output terminal of the full-wave rectifier DB, and a smoothing capacitor C2 is connected to opposite ends of the secondary coil of the transformer T2 via the diode D2. The polarity direction of the diode D2 is determined to prevent the current from flowing when the switching device Q2 is turned on.

When the switching device Q2 is turned on, the input current flows from the AC power source Vs via the full wave rectifier DB and the primary coil of the transformer. At this time, the diode D2 is not conductive, and thus the transformer T2 functions as an inductor, thereby accumulating an energy in the transformer T2. When the switching device Q2 is turned off, the energy accumulated in the transformer T2 is discharged to the smoothing capacitor C2 via the diode D2. The DC voltage Vdc applied across the smoothing capacitor C2 is insulated from an input side (AC power source side). Meanwhile, a photocoupler PC1 may be used to supply to a PFC circuit 9 a detecting voltage obtained by dividing the voltage of the smoothing capacitor C2 with the resistors R13 and R14.

The PFC circuit 9 of controlling the switching device Q2 of the flyback converter circuit 8 detects a ripple voltage outputted from the full wave rectifier DB by dividing it with resistors R16 and R17, and controls an envelope of the peak value of the primary coil of the transformer T2 flowing through the switching device Q2 to be substantially proportional to waveforms of the ripple voltage. Therefore, a source current of the switching device Q2 is detected by performing voltage conversion using a resistor R15, and the switching device Q2 is controlled to be turned off when the detected voltage reaches a target value that is nearly proportional to the ripple voltage.

Also, the voltage charged in the smoothing capacitor C2 is divided with the resistors R13 and R14 and detected, and then supplied to the PFC circuit 9 via the photocoupler PC1. If the voltage Vdc charged in the smoothing capacitor C2 is low, the target value is set up to be high in order to prolong the on-time width of the switching device Q2. On the other hand, if the voltage Vdc charged in the smoothing capacitor C2 is high, the target value is set up to be low in order to shorten the on-time width of the switching device Q2.

Further, an auxiliary coil for detecting the flyback current is provided in the transformer T2, and the loss (zero crossing) of the flyback current generated by the transformer T2 is detected depending on the presence of the auxiliary coil's voltage, thereby controlling the switching device Q2 to be secondly turned on at a point of time when the flyback current disappears.

Although the configuration for obtaining a control power source voltage Vcc of the PFC circuit 9 is not illustrated, for example, a following configuration may be used. A power source capacitor may be charged from a coil for detecting the flyback current of the transformer T2 via a rectifying diode, after the power source capacitor is charged with a voltage from the output terminal of the full wave rectifier DB via a current restricting resistor and the PFC circuit 9 starts to be operated by the charged voltage.

Next, the on-pulse width of the switching device Q1 is set up by the timer circuit TM.

As the timer circuit TM, a general timer IC (so-called 555), for example, µPD5555 or its compatible product of Renesas Electronics (which was NEC electronics), may be used. The 1^{st} pin is a ground terminal, and the 8^{th} pin is a power source terminal. A control power source voltage Vcc2 supplied to the power source terminal may be supplied from a secondary capacitor C2 via a control power source circuit (not shown).

The 2^{nd} pin is a trigger terminal. If the voltage of the 2^{nd} pin is lower than a half voltage of the 5^{th} pin, an internal flip-flop is reversed, the 3^{rd} pin (output terminal) becomes high level, and the 7^{th} pin (discharging terminal) becomes open-circuited.

The 4^{th} pin is a reset terminal. If this terminal becomes the low level, the operation is suspended, and the 3^{rd} pin (output terminal) is fixed to the low level.

The 5^{th} pin is a control terminal, to which a reference voltage corresponding to two-thirds of the power source voltages Vcc2 is typically applied by a built-in divider resistor. However, in this embodiment, a DC voltage is applied to the 5^{th} pin, the DC voltage being obtained by rectifying a low-frequency square wave voltage signal outputted from the terminal a of the dimming control circuit 21 by the filter circuit including the resistor R5 and the capacitor C5.

The 6^{th} pin is a threshold terminal. If the voltage of this terminal is higher than the voltage of the 5^{th} pin, an internal flip-flop is reversed, the 3^{rd} pin (output terminal) becomes the low level, and the 7^{th} pin (discharging terminal) is short-circuited from the 1^{st} pin.

The dimming control circuit 21 determines a dimming signal from the dimmer. To make the switching device Q1 be in a bust-on state, the 4^{th} pin of the timer circuit TM is set up in the high level during the burst-on period. At this time, the timer circuit TM operates as an unstable multi-vibrator and, if the 2^{nd} pin is lower than a half voltage of the 5^{th} pin, the internal flip-flop is reversed, the 3^{rd} pin has the high level, and the 7^{th} pin becomes open-circuited. Accordingly, the capacitor C6 is charged via a charging resistor Rc and a diode D5.

If the voltage charged in the capacitor C6 and applied to the 6^{th} pin is higher than the voltage of the 5^{th} pin, the internal flip-flop is reversed, the 3^{rd} pin (output terminal) becomes the low level, and the 7^{th} pin (discharging terminal) is short-circuited from the 1^{st} pin. Accordingly, the capacitor C6 is discharged through a discharging resistor Rd, and thus the voltage is dropped. If the voltage charged in the capacitor C6 and applied to the 2^{nd} pin is lower than the half voltage of the 5^{th} pin, the internal flip-flop is reversed, the 3^{rd} pin becomes the high level, and the 7^{th} pin becomes open-circuited. Accordingly, the capacitor C6 is charged through a charging resistor Rc and the diode D5. The above operations are repeated.

As such, the timer circuit TM operates as a general unstable multi-vibrator. The on-time width of the switching device Q1 is variable depending on the time constant of the charging resistor Rc, the capacitor C6 and the voltage of the 5^{th} pin. Also, the off-time width of the switching device Q1 is variable depending on the time constant of the discharging resistor Rd, the capacitor C6 and the voltage of the 5^{th} pin.

Thus, during the burst-on period set up by the dimming control circuit 21, the switching device Q1 is operated for the on- and off-time width based on the voltage of the 5^{th} pin set up by the dimming control circuit 21. If the voltage of the 5^{th} pin is dropped, a varying width of the voltage of the oscillating capacitor C6 becomes narrower, and thus both the on- and off-time width are also decreased. However, the discharge current discharged via the resistor Rd is decreased while the charging current charged via the resistor Rc is increased, so that a decrement of the on-time width becomes higher than that of the off-time width.

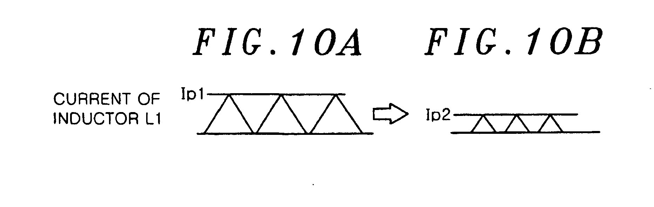

This is advantageous to drive a light emitting diode having a substantially constant load voltage. If a ratio of the on-time width and the off-time width is set up in such a way that the current flowing through the inductor L1 enters the discontinuous mode near to the boundary mode as shown in Fig. 10A when the 5^{th} pin has the maximum voltage, it can always is operated in the discontinuous mode even though the voltage of the 5^{th} pin is variable. Specifically, the resistors Rc and Rd and the capacitor C6 may be designed such that the on-time width is slightly decreased as compared with that of a critical condition where ^{┌}on-time width X (power source voltage - load voltage) ≒ off-time width X load voltage_{┘}.

In such a design, if the voltage of the 5^{th} pin is dropped, both the on- and off-time width of the switching device Q1 are decreased, but the decrement of the on-time width becomes higher than that of the off-time width. Therefore, the suspending period of the current flowing through the inductor L1 is increased.

Thus, if the voltage of the 5^{th} pin of the timer circuit TM is dropped by the dimming control circuit 21, the peak of the current flowing through the inductor L1 is decreased and the suspending period of the current is prolonged as shown in (b) of Fig. 10, so that an average current flowing during the burst-on period can be reduced.

As described above, by the dimming control circuit 21, the 4^{th} pin of the timer circuit TM alternates between high and low at a low frequency of hundreds Hz to several kHz, and the burst-on period is variable, so that the stable dimming can be realized in a wide range by flowing a high average current for a long time and a low average current for a short time.

Also, the smoothing capacitor C1 connected to the solid-state light source 3 in parallel is dispensable, but has an effect on reducing glimmering light of the illumination apparatus when it is connected.

The lighting device of the present embodiments may be used in various light sources such as a backlight of an LCD monitor, or a light source of a projector without being limited to the illumination apparatus. If the lighting device is used as a light source lighting device for such a kind of image display apparatus, the smoothing capacitor C1 connected to the solid-state light source 3 in parallel may be removed, and an image renewal period and a burst-on period may be synchronized with each other.

In the foregoing embodiments, the light emitting diode was described as the solid-state light source 3, but the present invention is not limited thereto. Alternatively, an organic light emitting diode, a semiconductor laser device, etc. may be used as the solid-state light source.

While the invention has been shown and described with respect to the embodiments, it will be understood by those skilled in the art that various changes and modifications may be made without departing from the scope of the invention as defined in the following claims.

## Claims

1. A lighting device for a solid-state light source, comprising:
a DC power source circuit unit for performing power transform of an input DC power source by using a switching device (Q1) and allowing a thus-generated current to flow through the solid-state light source (3); and
a current control unit (2) configured to control the switching device (Q1) to adjust the current flowing through the solid-state light source (3),
wherein the current control unit (2) includes a first switching control unit for varying an on-time width of the switching device; and a second switching control unit for performing activation and inactivation of the switching device (Q1), and
wherein an activating period of the second switching control unit is longer than one cycle of the first switching control unit, and dimming control is achieved by the first switching control unit and the second switching control unit,
**characterized in that**
brightness of the solid-state light source (3) is controlled mainly by the first switching control unit when the brightness is equal to or greater than a predetermined level and mainly by the second switching control unit when the brightness is smaller than the predetermined level.

2. The lighting device of claim 1, wherein, in the DC power source circuit unit, an inductor (L1) is connected to the switching device (Q1) in series so that a current flows through the solid-state light source (3) by using a charging current and a discharge current of the inductor (L1), and the first switching control unit controls the switching device so that the currents of the inductor (L1) perform a zero-crossing operation.

3. The lighting device of any one of claims 1 or 2, wherein the DC power source circuit unit includes a capacitive impedance (C1) connected to the solid-state
light source (3) in parallel, and the current flowing through the solid-state light source (3) has continuous waveforms.

4. The lighting device of any one of claims 1 to 3, further comprising a dimming control unit (5) configured to output a dimming control signal based on an external dimming signal,
wherein an output level of each of the switching control units of the current control unit (2) is varied depending on signal levels of the dimming control signal, and the dimming control unit outputs one signal.

5. The lighting device of any one of claims 1 to 3, further comprising a dimming control unit (50) configured to output a dimming control signal in accordance with an external dimming signal,
wherein the dimming control unit (50) outputs two independent dimming control signals with regard to the respective switching control units of the current control unit (2).

6. The device of any one of claims 1 to 5, wherein an activating period is substantially consistently maintained by the second switching control unit at an approximately lowest limit value of the on-time width of an operating period of the first switching control unit.

7. The device of any one of claims 1 to 6, wherein the solid-state light source (3) is an LED.

8. An illumination apparatus comprising the lighting device of any one of claims 1 to 7.

9. An illumination system comprising the lighting device of any one of claims 1 to 7.

10. The illumination apparatus of claim 8, wherein the apparatus comprises a cold-color solid-state light source lighting device and a warm-color solid-state light source lighting device, and
wherein light outputs of a cold-color solid-state light source and a warm-color solid-state light source are individually controlled by the cold-color solid-state light source lighting device and the warm-color solid state light source lighting device, respectively.

## Patentansprüche

1. Beleuchtungsvorrichtung für eine Festkörperleuchtquelle, umfassend:
eine DC-Stromquellen-Schaltkreiseinheit, um eine Stromumwandlung einer Eingangs-DC-Stromquelle unter Verwendung einer Schaltvorrichtung (Q1) auszuführen und um es einem so erzeugten Strom zu ermöglichen, durch die Festkörperleuchtquelle (3) zu fließen; und
eine Stromsteuereinheit (2), die ausgelegt ist, die Schaltvorrichtung (Q1) zu steuern, um den durch die Festkörperleuchtquelle (3) fließenden Strom, anzupassen,
wobei die Stromsteuereinheit (2) eine erste Schaltsteuereinheit zur Variation einer on-time Breite der Schaltvorrichtung und eine zweite Schaltsteuereinheit zur Ausführung einer Aktivierung und Deaktivierung der Schaltvorrichtung (Q1) einschließt, und
wobei eine Aktivierungsperiode der zweiten Schaltsteuereinheit länger ist als ein Takt der ersten Schaltsteuereinheit und eine Dimmungssteuerung durch die erste Schaltsteuereinheit und die zweite Schaltsteuereinheit erreicht wird,
**dadurch gekennzeichnet, dass**
die Helligkeit der Festkörperleuchtquelle (3) hauptsächlich durch die erste Schaltsteuereinheit gesteuert wird, wenn die Helligkeit gleich zu oder größer als ein vordefiniertes Niveau ist, und hauptsächlich durch die zweite Schaltsteuereinheit, wenn die Helligkeit geringer als ein vordefiniertes Niveau ist.

2. Beleuchtungsvorrichtung gemäß Anspruch 1, bei der in der DC-Stromquellen-Schaltkreiseinheit ein Induktor (L1) mit der Schaltvorrichtung (Q1) in Reihe geschaltet ist, so dass Strom durch Verwendung eines Ladestroms und eines Entladestroms des Induktors (L1) durch die Festkörperleuchtquelle (3) fließt und die erste Schaltsteuereinheit die Schaltvorrichtung steuert, so dass die Ströme des Induktors (L1) eine Nulldurchgangs-Operation ausführen.

3. Beleuchtungsvorrichtung gemäß einem der Ansprüche 1 oder 2, bei der die DC-Stromquellen-Schaltkreiseinheit eine kapazitive Impedanz (C1) umfasst, die mit der Festkörperleuchtquelle (3) parallel geschaltet ist, und der Strom, der durch die Festkörperleuchtquelle (3) fließt, kontinuierliche Wellenformen hat.

4. Beleuchtungsvorrichtung gemäß einem der Ansprüche 1 bis 3, weiter umfassend eine Dimmungssteuereinheit (5), die geeignet ist, um ein Dimmungssteuersignal basierend auf einem externen Dimmungssignal auszugeben,
wobei ein Ausgabeniveau von jeder der Schaltsteuereinheiten der Stromsteuereinheit (2) in Abhängigkeit von Signalniveaus des Dimmungssteuersignals variiert wird und die Dimmungssteuereinheit ein Signal ausgibt.

5. Beleuchtungsvorrichtung gemäß einem der Ansprüche 1 bis 3, weiter umfassend eine Dimmungssteuereinheit (50), die geeignet ist, um ein Dimmungssteuersignal in Übereinstimmung mit einem externen Dimmungssignal auszugeben,
wobei die Dimmungssteuereinheit (50) zwei unabhängige Dimmungssteuersignale bezüglich der jeweiligen Schaltsteuereinheiten der Stromsteuereinheit (2) ausgibt.

6. Vorrichtung gemäß einem der Ansprüche 1 bis 5, bei der eine Aktivierungsperiode durch die zweite Schaltsteuereinheit im Wesentlichen konsistent auf einem näherungsweise niedrigsten Grenzwert der on-time Breite einer Betriebsperiode der ersten Schaltsteuereinheit gehalten wird.

7. Vorrichtung gemäß einem der Ansprüche 1 bis 6, bei der die Festkörperleuchtquelle (3) als eine LED vorgesehen ist.

8. Illuminationsvorrichtung umfassend die Beleuchtungsvorrichtung gemäß einem der Ansprüche 1 bis 7.

9. Illuminationssystem umfassend die Beleuchtungsvorrichtung gemäß einem der Ansprüche 1 bis 7.

10. Illuminationsvorrichtung gemäß Anspruch 8, bei der die Vorrichtung eine kaltfarbige Festkörperleuchtquellen-Beleuchtungsvorrichtung und eine warmfarbige Festkörperleuchtquellen-Beleuchtungsvorrichtung umfasst, und
wobei die Lichtausgaben einer kaltfarbigen Festkörperleuchtquelle und einer warmfarbigen Festkörperleuchtquelle individuell durch die kaltfarbige Festkörperleuchtquellen-Beleuchtungsvorrichtung beziehungsweise die warmfarbige Festkörperleuchtquellen-Beleuchtungsvorrichtung gesteuert werden.

## Revendications

1. Dispositif d'éclairage destinée à une source de lumière à semi-conducteurs, comprenant :
une unité de circuit source d'énergie à courant continu destinée à effectuer une transformation d'énergie d'une source d'énergie à courant continu d'entrée en utilisant un dispositif de commutation (Q1) et en permettant à un courant ainsi généré de circuler dans la source de lumière à semi-conducteurs (3) ; et
une unité de commande de courant (2) configurée pour commander le dispositif de commutation (Q1) afin d'ajuster le courant circulant dans la source de lumière à semi-conducteurs (3),
dans lequel l'unité de commande de courant (2) comprend une première unité de commande de commutation destinée à faire varier une largeur de temps de marche du dispositif de commutation ; et une seconde unité de commande de commutation destinée à effectuer l'activation et l'inactivation du dispositif de commutation (Q1), et
dans lequel une période d'activation de la seconde unité de commande de commutation est plus longue qu'un cycle de la première unité de commande de commutation, et une commande de gradation est réalisée par la première unité de commande de commutation et par la seconde unité de commande de commutation,
**caractérisé en ce que**
la luminosité de la source de lumière à semi-conducteurs (3) est principalement commandée par la première unité de commande de commutation quand la luminosité est supérieure ou égale à un niveau prédéterminé et principalement commandée par la seconde unité de commande de commutation quand la luminosité est inférieure au niveau prédéterminé.

2. Dispositif d'éclairage selon la revendication 1, dans lequel, dans l'unité de circuit source d'énergie à courant continu, un inducteur (L1) est connecté au dispositif de commutation (Q1) en série de sorte qu'un courant circule dans la source de lumière à semi-conducteurs (3) en utilisant un courant de charge et un courant de décharge de l'inducteur (L1), et la première unité de commande de commutation commande le dispositif de commutation de sorte que les courants de l'inducteur (L1) effectuent une opération de passage à zéro.

3. Dispositif d'éclairage selon l'une quelconque des revendications 1 ou 2, dans lequel l'unité de circuit source d'énergie à courant continu comprend une impédance capacitive (CI) connectée à la source de lumière à semi-conducteurs (3) en parallèle, et le courant circulant dans la source de lumière à semi-conducteurs (3) présente des formes d'onde continues.

4. Dispositif d'éclairage selon l'une quelconque des revendications 1 à 3, comprenant en outre une unité de commande de gradation (5) configurée pour sortir un signal de commande de gradation sur la base d'un signal de gradation externe,
dans lequel un niveau de sortie de chacune des unités de commande de commutation de l'unité de commande de courant (2) varie en fonction des niveaux de signal du signal de commande de gradation, et l'unité de commande de gradation sort un signal.

5. Dispositif d'éclairage selon l'une quelconque des revendications 1 à 3, comprenant en outre une unité de commande de gradation (50) configurée pour sortir un signal de commande de gradation conformément à un signal de gradation externe,
dans lequel l'unité de commande de gradation (50) sort deux signaux de commande de gradation indépendants par rapport aux unités de commande de commutation respectives de l'unité de commande de courant (2).

6. Dispositif d'éclairage selon l'une quelconque des revendications 1 à 5, dans lequel une période d'activation est maintenue de façon sensiblement constante par la seconde unité de commande de commutation à une valeur de limite approximativement la plus basse de la largeur de temps de marche d'une période de fonctionnement de la première unité de commande de commutation.

7. Dispositif d'éclairage selon l'une quelconque des revendications 1 à 6, dans lequel la source de lumière à semi-conducteurs (3) est une DEL.

8. Appareil d'éclairage comprenant le dispositif d'éclairage selon l'une quelconque des revendications 1 à 7.

9. Système d'éclairage comprenant le dispositif d'éclairage selon l'une quelconque des revendications 1 à 7.

10. Appareil d'éclairage selon la revendication 8, dans lequel l'appareil comprend un dispositif d'éclairage à source de lumière à semi-conducteurs de couleur froide et un dispositif d'éclairage à source de lumière à semi-conducteurs de couleur chaude, et
dans lequel les sorties lumineuses d'une source de lumière à semi-conducteurs de couleur froide et d'une source de lumière à semi-conducteurs de couleur chaude sont individuellement commandées respectivement par le dispositif d'éclairage à source de lumière à semi-conducteurs de couleur froide et par le dispositif d'éclairage à source de lumière à semi-conducteurs de couleur chaude.
